# EUROPÄISCHE PATENTSCHRIFT

(11) **EP 1 165 659 B1**
(45) Veröffentlichungstag und Bekanntmachung des Hinweises auf die Patenterteilung: **14.04.2004**
(21) Anmeldenummer: 00906216.7
(22) Anmeldetag: 21.01.2000
(51) Int. Cl.: C08G 65/26, B01J 27/26

(54) **VERFAHREN ZUR HERSTELLUNG VON POLYETHERPOLYOLEN**
METHOD FOR PREPARING POLYETHER POLYOLS
PROCEDE DE PREPARATION DE POLYETHERPOLYOLS

(30) Priorität: 28.01.1999 DE 19903274
(43) Veröffentlichungstag der Anmeldung: 02.01.2002
(73) Patentinhaber: BASF AKTIENGESELLSCHAFT, 67056 Ludwigshafen (DE)
(72) Erfinder: GROSCH, Georg, Heinrich, D-67098 Bad Dürkheim (DE); LARBIG, Harald, D-67063 Ludwigshafen (DE); LORENZ, Reinhard, D-48366 Laer (DE); JUNGE, Dieter, D-67227 Frankenthal (DE); HARRE, Kathrin, D-01109 Dresden (DE)
(86) Internationale Anmeldenummer: PCT/EP2000/000449
(87) Internationale Veröffentlichungsnummer: WO 2000/044813

(56) Entgegenhaltungen:
- EP-A- 0 892 002
- US-A- 3 829 505
- CHEMICAL ABSTRACTS, vol. 83, no. 18, 3. November 1975 (1975-11-03) Columbus, Ohio, US; abstract no. 147844a, LIVIGNI R.A. ET AL: "POLYPROPYLENE ETHER POLYOLS PREPARED WITH A ZINC HEXACYANOCOBALTATE COMPLEX CATALYST" XP002138899 & ACS. SYMP. SER., Bd. 6, 1975, Seiten 20-37,

## Beschreibung

Die Erfindung betrifft ein Verfahren zur Herstellung von Polyetherpolyolen durch katalytische Umsetzung von H-funktionellen Startsubstanzen mit niederen Alkylenoxiden.

Polyetherpolyole werden in großen Mengen zur Herstellung von Polyurethanen eingesetzt. Ihre Herstellung erfolgt zumeist durch katalytische Anlagerung von niederen Alkylenoxiden, insbesondere Ethylenoxid und Propylenoxid, an H-funktionelle Starter. Als Katalysatoren werden zumeist basische Metallhydroxide oder Salze verwendet, wobei das Kaliumhydroxid die größte praktische Bedeutung hat.

Bei der Synthese von Polyetherpolyolen mit langen Ketten und Hydroxylzahlen von ca. 26 bis ca. 60 mg KOH / g, wie sie besonders zur Herstellung von Polyurethan-Weichschäumen eingesetzt werden, kommt es bei fortschreitendem Kettenwachstum zu Nebenreaktionen, die zu Störungen im Kettenaufbau führen. Diese Nebenprodukte werden als ungesättigte Bestandteile bezeichnet und führen zu einer Beeinträchtigung der Eigenschaften der resultierenden Polyurethan-Materialien. Insbesondere haben diese ungesättigten Bestandteile, die die OH-Funktionalität 1 aufweisen, folgende Konsequenzen:
- Sie sind aufgrund ihres z.T. sehr niedrigen Molekulargewichtes flüchtig und erhöhen so den Gesamtgehalt an flüchtigen Bestandteilen im Polyetherpolyol und in den daraus hergestellten Polyurethanen, insbesondere Polyurethan-Weichschäumen.
- Sie wirken bei der Herstellung des Polyurethans als Kettenabbrecher, weil sie die Vernetzung des Polyurethans bzw. den Aufbau des Molekulargewichtes des Polyurethans verzögern bzw. verringern.
- Sie verringern die effektive OH-Funktionalität der hergestellten Polyetherpolyole. So haben mit Glycerin gestartete und Kaliumhydroxid katalysierte, handelsübliche Weichschaum-Polyetherpolyole eine effektive OH-Funktionalität von nur etwa 2,1 bis 2,6, obwohl mit Glycerin ein trifunktioneller Starter eingesetzt wurde.

Es ist daher technisch sehr wünschenswert, die ungesättigten Bestandteile soweit als möglich zu vermeiden. Andererseits sind viele, z.T. komplexe Polyurethan-Rezepturen auf Polyetherpolyole mit OH-Funktionalitäten von 2,1 bis 2,6 eingerichtet. Es ist daher erwünscht, Polyetherpolyole mit OH-Funktionalitäten von 2,1 bis 2,6 herzustellen, die jedoch nur ein Minimum an ungesättigten Bestandteilen aufweisen sollen.

Es hat in der Vergangenheit nicht an Versuchen gefehlt, Polyetherpolyole mit einem niedrigen Gehalt an ungesättigten Bestandteilen bereitzustellen. Hierzu werden insbesondere die eingesetzten Alkoxylierungskatalysatoren gezielt verändert. So wird in EP-A-268 922 vorgeschlagen, Cäsiumhydroxid einzusetzen. Damit kann zwar der Gehalt an ungesättigten Anteilen gesenkt werden, Cäsiumhydroxid ist jedoch teuer und problematisch zu entsorgen.

Weiterhin ist die Verwendung von Multimetallcyanidkatalysatoren, zumeist Zinkhexacyanometallaten, zur Herstellung von Polyetherpolyolen mit niedrigen Gehalten an ungesättigten Bestandteilen bekannt. Es gibt eine große Zahl von Dokumenten, die die Herstellung derartiger Verbindungen beschreibt. So wird in DD-A-203 735 und DD-A-203 734 die Herstellung von Polyetherpolyolen unter Verwendung von Zinkhexacyanocobaltat beschrieben. Durch Verwendung von Multimetallcyanidkatalysatoren kann der Gehalt an ungesättigten Bestandteilen im Polyetherpolyol auf ca. 0,003 bis 0,009 meq / g abgesenkt werden - bei konventioneller Katalyse mit Kaliumhydroxid findet man etwa 10-fache Mengen (ca. 0,03 bis 0,08 meq / g).

Auch die Herstellung der Zinkhexacyanometallate ist bekannt. Üblicherweise erfolgt die Herstellung dieser Katalysatoren, indem Lösungen von Metallsalzen, wie Zinkchlorid, mit Lösungen von Alkali- oder Erdalkalimetallcyanometallaten, wie Kaliumhexacyanocobaltat, umgesetzt werden. Zur entstehenden Fällungssuspension wird in der Regel sofort nach dem Fällungsvorgang eine wassermischbare, Heteroatome enthaltende Komponente zugegeben. Diese Komponente kann auch bereits in einer oder in beiden Eduktlösungen vorhanden sein. Diese wassermischbare, Heteroatome enthaltende Komponente kann beispielsweise ein Ether, Polyether, Alkohol, Keton oder eine Mischung davon sein. Derartige Verfahren sind beispielsweise in US 3,278,457, US 3,278,458, US 3,278,459, US 3,427,256, US 3,427,334, US 3,404,109, US 3,829,505, US 3,941,849, EP 283,148, EP 385,619, EP 654,302, EP 659,798, EP 665,254, EP 743,093, EP 755,716, US 4,843,054, US 4,877,906, US 5,158,922, US 5,426,081, US 5,470,813, US 5,482,908, US 5,498,583, US 5,523,386, US 5,525,565, US 5,545,601, JP 7,308,583, JP 6,248,068, JP 4,351,632 und US-A-5,545,601 beschrieben.

In DD-A-148 957 wird die Herstellung von Zinkhexacyanoiridat und dessen Verwendung als Katalysator bei der Polyetherpolyol-Herstellung beschrieben. Dabei wird als ein Ausgangsstoff Hexacyanoiridiumsäure verwendet. Diese Säure wird als Feststoff isoliert und in dieser Form eingesetzt.

In EP-A-862 947 wird die Herstellung von anderen Doppelmetallcyanidkomplexen beschrieben, insbesondere die Verwendung der Cyanocobaltsäure bzw. deren wässrige Lösungen als Edukt. Die gemäß der Lehre von EP-A-862 947 erzeugten Doppelmetallcyanide weisen eine hohe Reaktivität für die ringöffnende Polymerisation von Alkylenoxiden auf.

Multimetallcyanidkatalysatoren weisen extrem hohe Polymerisationsraten auf und erlauben es, hohe Raum-Zeit-Ausbeuten bei der Polymerisation zu erzielen. Allerdings gibt es bei der Verwendung von Multimetallcyanidkatalysatoren erhebliche Einschränkungen in Bezug auf die verwendbaren H-funktionellen Starter. Man unterscheidet zwei Typen von Startern:

Einige Starter sind für die sogenannte Vorlagefahrweise geeignet. Diese Starter, im folgenden als Vorlage-Starter bezeichnet, werden im Reaktor vorgelegt, durch mehrfache Stickstoff-Begasung von Sauerstoff befreit und im Vakuum von ≤ 1 mbar 30 bis 120 min bei 50 bis 120 °C entwässert, wobei Entwässerungszeit und Entwässerungstemperatur vom Siedepunkt des Vorlage-Starters abhängen. Anschließend wird der Multimetallcyanidkatalysator zugegeben und die Stickstoff-Begasung sowie die Entwässerung werden, falls notwendig, wiederholt. Nach Zugabe des Alkylenoxids zeigen als Vorlage-Starter geeignete Verbindungen bei Reaktortemperaturen von 90 bis 140 °C ein Anspringen der Polymerisationsreaktion, erkennbar am Druckabfall im Reaktor, innerhalb von wenigen Minuten bis maximal 2 Stunden. Wenn die Reaktion innerhalb von 2 Stunden nicht anspringt, ist der Starter als Vorlage-Starter ungeeignet.

In der Praxis zeigt sich, daß als Vorlage-Starter insbesondere folgende Starter geeignet sind: Rizinusöl, auch als Kastoröl bezeichnet, und Fettalkohole, z.B. 1-Dodecanol. Mit Fettalkoholen gestartete Polyetherole sind jedoch für die Herstellung von PU-Weichschaum ungeeignet. Rizinusöl ist zwar prinzipiell als Starter für Weichschaum-Polyetherole geeignet, jedoch nicht in ausreichender Menge und gleichbleibender Qualität verfügbar. Von besonderer Bedeutung als Vorlage-Starter sind Ethoxylate und Propoxylate mit Molmassen ≥ 400 Dalton. Diese Starter müssen in der Regel durch Alkoxylierung von niedermolekularen Startern, wie Ethylenglykol, Diethylenglykol, Propylenglykol, Dipropylenglykol, insbesondere Glycerin und Trimethylolpropan, mit basischen Katalysatoren, wie KOH, hergestellt werden. Bevor diese Starter dann zur Polymerisation mit den Multimetallcyanidkatalysatoren verwendet werden können, muß der basische Katalysator quantitativ entfernt werden, was wirtschaftlich nachteilig ist.

Bei Verwendung von Tripropylenglykol als Startsubstanz wurde beobachtet, daß es selbst und dessen Alkoxylate mit Molmassen kleiner als 400 Dalton als Vorlage-Starter geeignet sind. Jedoch zeigen Tripropylenglykol und seine Alkoxylate mit Molmassen kleiner als 400 Dalton ein weniger vorteilhaftes Anspringverhalten als z.B. ein lineares Polypropylenglykol mit der zahlenmittleren Molmasse von 400 Dalton.

Ein erheblicher Mangel der Verfahren des Standes der Technik besteht darin, daß ein in der Technik so bedeutsamer Starter wie Glycerin, mit dem die Mehrzahl aller handelsüblichen Polyole für Polyurethan-Weichschaum-Anwendungen gestartet sind, als Vorlage-Starter ungeeignet ist, da die Reaktion nicht anspringt. Glycerin kann zwar einem geeigneten Vorlage-Starter in einer Menge von 10 oder 20 Gew.-% zugesetzt werden, ohne das Anspringen der Reaktion zu gefährden, jedoch werden damit die oben angesprochenen wirtschaftlichen Nachteile nicht hinreichend beseitigt.

Glycerin eignet sich jedoch, wie US 5,777,177 offenbart, für die sogenannte Additions-Fahrweise. Bei der Additions-Fahrweise wird die Alkoxylierungs-Reaktion mit einem Vorlage-Starter gestartet und, sobald die Reaktion stabil läuft, wird ein weiterer Starter, z.B. Glycerin, in kleiner Menge parallel zu den Alkylenoxiden so zugegeben, daß die Reaktion nicht abbricht. Um eine hinreichend enge Molmassenverteilung des Polyetherols zu erzielen, wird die Zugabe des Glycerins deutlich vor der Zugabe des Alkylenoxids beendet.

Starter, die als Vorlage-Starter ungeeignet sind, jedoch bei der Additions-Fahrweise verwendet werden können, werden im folgenden als Additions-Starter bezeichnet. Beispiele hierfür sind Glycerin, Propylenglykol oder Ethylenglykol.

Die Additions-Fahrweise bedingt aber Änderungen an den bestehenden Produktionsanlagen, so daß es wünschenswert sein kann, nur Vorlage-Starter zu verwenden und dennoch alle Vorteile der Multimetallcyanidkatalyse zu nutzen.

Aufgabe der Erfindung war es, Starter bereitzustellen, die sich als Vorlage-Starter eignen und die die Herstellung von Polyetherolen unter Verwendung von Multimetallcyanidkatalysatoren mit hoher Raum-Zeit-Ausbeute ermöglichen.

Gegenstand der Erfindung ist demzufolge ein Verfahren zur Herstellung von Polyetherpolyolen durch katalytische Umsetzung von H-funktionellen Startsubstanzen mit niederen Alkylenoxiden, wie definert in Anspruch 1.

Gegenstand der Erfindung sind weiterhin die nach dem erfindungsgemäßen Verfahren hergestellten Polyetheralkohole, deren Verwendung zur Herstellung von Polyurethanen sowie die so hergestellten Polyurethane.

Besonders bevorzugt ist die Verwendung von Butandiol-1,4, α-Hydroxy-ω-hydroxypoly(oxy-1,4-butandiyl) und Pentandiol-1,5 als Startsubstanzen. Bei Verwendung dieser Verbindungen als Startsubstanzen für das erfindungsgemäße Verfahren ist die Zeit bis zum Anspringen der Reaktion besonders kurz, so daß die Raum-Zeit-Ausbeute besonders hoch ist. Das Molekulargewicht des α-Hydroxy-ω-hydroxypoly(oxy-1,4-butandiyl) liegt bevorzugt im Bereich von 200 bis 2500 g/mol.

In einer bevorzugten Ausführungsform der Erfindung werden die erfindungsgemäß verwendeten Starter gemeinsam mit anderen H-funktionellen Startsubstanzen eingesetzt.

Durch diese Möglichkeit der Mitverwendung von bekannten, insbesondere dreifunktionellen, Startern wie Glyzerin oder Trimethylolpropan ist es möglich, nach dem erfindungsgemäßen Verfahren auch Polyetheralkohole mit den für die Herstellung von Polyurethan-Weichschaumstoffen üblichen Funktionalität im Bereich von 2,1 bis 2,6 herzustellen. Die Menge der zusätzlich verwendeten Starter ist so zu bemessen, daß die Endprodukte die erwünschte Funktionalität aufweisen, sollte jedoch 10 %, bezogen auf den eingesetzten Starter, nicht überschreiten, da es ansonsten zu einem verzögerten Anspringen der Reaktion kommen kann. In einer Ausführungsform des erfindungsgemäßen Verfahrens werden als zusätzlich verwendete Starter Umsetzungsprodukte der genannten Starter mit Alkylenoxiden eingesetzt. Diese Umsetzungsprodukte haben vorzugsweise ein Molekulargewicht im Bereich von 300 bis 600.

Es ist auch möglich, die bekannten Additionsstarter, beispielsweise Glycerin, nach dem Anspringen der Anlagerung der Alkylenoxide an die erfindungsgemäß verwendeten Starter zu dem Reaktionssystem zu dosieren. Hierbei können die Additionsstarter in einer Menge bis zu 200 Mol.-%, bezogen auf den eingesetzten Vorlagestarter, zudosiert werden. Damit ist es möglich, Polyetherole mit einer Funktionalität von bis zu 2,66 herzustellen.

Die zur Herstellung der erfindungsgemäßen Polyetherole verwendeten Multimetallcyanidverbindungen sind als sehr wirksame Katalysatoren zur Herstellung polyfunktioneller Polyether bekannt.

Einzelheiten zur Herstellung und Verwendungen dieser Multimetallcyanidkomplex-Verbindungen für die Herstellung polyfunktioneller Polyether sind in folgenden Dokumenten offenbart:

US 3,278,457, US 3,278,458 und US 3,278, US 3,427,256, US 3,427,334, US 3,404,109, US 3,829,505, US 3,941,849, EP 654,302 und US 5,470,813 , EP 743,093, WO 97/23,544, WO 97/26,080, WO 97/29,146, WO 97/40,086, US 5,714,428, US 5,593,584, US 5,527,880, US 5,482,908.

Die Herstellung der Multimetallcyanidverbindungen kann nach den in den genannten Schriften offenbarten Herstellungsverfahren erfolgen.

Diese Herstellungsverfahren gliedern sich üblicherweise in folgende Verfahrensschritte:
a) Hinzufügen einer wäßrigen Lösung eines wasserlöslichen Metallsalzes der allgemeinen Formel M¹ₘ(X)ₙ, wobei M¹ mindestens ein Metallion, ausgewählt aus der Gruppe, enthaltend Zn²⁺, Fe²⁺, Co³⁺, Ni²⁺, Mn²⁺, Co²⁺, Sn²⁺, Pb²⁺, Fe³⁺, Mo⁴⁺, Mo⁶⁺, Al³⁺, V⁵⁺, Sr²⁺, W⁴⁺, W⁶⁺, Cu²⁺, Cr²⁺, Cr³⁺, Cd²⁺,
   X mindestens ein Anion, ausgewählt aus der Gruppe, enthaltend Halogenid, Hydroxid, Sulfat, Carbonat, Cyanid, Thiocyanat, Isocyanat, Carboxylat, insbesondere Formiat, Acetat, Propionat, Oxalat, Nitrat bedeuten und m und n ganze Zahlen sind, die den Wertigkeiten von M¹ und X genügen,
   zu einer wäßrigen Lösung einer Cyanometallat-Verbindung der allgemeinen Formel HₐM²(CN)_{b}(A)_{c}, wobei M² mindestens ein Metallion, ausgewählt aus der Gruppe, enthaltend Fe²⁺, Fe³⁺, Co³⁺, Cr³⁺, Mn²⁺, Mn³⁺, Rh³⁺, Ru²⁺, Ru³⁺, V⁴⁺, V⁵⁺, Co²⁺, Ir³⁺ und Cr²⁺ bedeutet und M² gleich oder verschieden M¹ sein kann,
   H Wasserstoff oder ein Metallion, üblicherweise ein Alkalimetall-, Erdalkalimetall- oder ein Ammoniumion bedeutet,
   A mindestens ein Anion, ausgewählt aus der Gruppe, enthaltend Halogenid, Hydroxid, Sulfat, Carbonat, Cyanat, Thiocyanat, Isocyanat, Carboxylat oder Nitrat, insbesondere Cyanid bedeutet, wobei A gleich oder verschieden X sein kann, und a, b und c ganze Zahlen sind, die so ausgewählt sind, daß die Elektroneutralität der Cyanidverbindung gewährleistet ist,
   wobei eine oder beide Lösungen gegebenenfalls mindestens einen wassermischbaren, Heteroatome enthaltenden Liganden enthalten können, der ausgewählt ist aus der Gruppe, enthaltend Alkohole, Aldehyde, Ketone, Ether, Polyether, Ester, Harnstoffe, Amide, Nitrile, Sulfide oder funktionalisierte Polymere gemäß US 5,714,428 enthalten kann,
b) Vereinigen der in Schritt a) gebildeten wäßrigen Suspension mit einem wassermischbaren, Heteroatome enthaltenden Liganden, ausgewählt aus der beschriebenen Gruppe, der gleich oder verschieden sein kann dem Liganden aus Schritt a),
c) Gegebenenfalls Abtrennen der Multimetallcyanidverbindung aus der Suspension.

Für die Herstellung der Multimetallcyanidverbindungen ist es vorteilhaft, als Cyanometallat-Verbindung die Säure zu verwenden, da es hierbei nicht zu einem Zwangsanfall eines Salzes als Nebenprodukt kommt.

Diese einsetzbaren Cyanometallat-Wasserstoffsäuren sind in wäßriger Lösung stabil und gut handhabbar. Ihre Herstellung kann beispielsweise, wie in W. Klemm, W. Brandt, R. Hoppe, Z. Anorg. Allg. Chem. 308, 179 (1961) beschrieben, ausgehend vom Alkalicyanometallat über das Silbercyanometallat zur Cyanometallat-Wasserstoffsäure erfolgen. Eine weitere Möglichkeit besteht darin, ein Alkali- oder Erdalkalicyanometallat mittels eines sauren Ionenaustauschers in eine Cyanometallat-Wasserstoffsäure umzuwandeln, wie beispielsweise in F. Hein, H. Lilie, Z. Anorg. Allg. Chem. 270, 45 (1952), oder A. Ludi, H.U. Güdel, V. Dvorak, Helv. Chim. Acta 50, 2035 (1967) beschrieben. Weitere Möglichkeiten zur Synthese der Cyanometallat-Wasserstoffsäuren finden sich beispielsweise in "Handbuch der Präparativen Anorganischen Chemie", G. Bauer (Herausgeber), Ferdinand Enke Verlag, Stuttgart, 1981.

Der Anteil der Säure in der Lösung sollte größer 80 Gew.-%, bezogen auf die Gesamtmasse an Cyanometallat-Komplexen, vorzugsweise größer 90 Gew.-%, insbesondere größer 95 Gew.-%, sein.

Als Heteroatome enthaltende Liganden werden die oben beschriebenen organischen Substanzen verwendet.

Der Gehalt der Liganden in der Suspension sollte 1 bis 60 Gew.-%, vorzugsweise 5 bis 40 Gew.-%, insbesondere 10 bis 30 Gew.-% betragen.

Die zur Durchführung des erfindungsgemäßen Verfahrens verwendeten Multimetallcyanide können kristallin oder amorph sein. Unter kristallinen Multimetallcyaniden werden dabei Multimetallcyanide verstanden, deren stärkster Reflex im Röntgendiffraktogramm mindestens eine dreimal höhere Intensität hat als der Untergrund der Messung. Kristalline Multimetallcyanide können ferner kubisch sein oder Röntgendiffraktogramme zeigen, wie sie in EP-A 755 715 beschrieben sind. Unter amorphen Multimetallcyaniden sollen solche Multimetallcyanide verstanden werden, deren stärkster Reflex im Röntgendiffraktogramm eine Intensität kleiner dreimal der Intensität des Untergrundes aufweist oder die Röntgendiffraktogramme zeigen, wie sie in EP-A 654 302 und EP-A 743 093 beschrieben sind.

Die Multimetallcyanidverbindungen können zur Synthese der erfindungsgemäßen Polyetherpolyole entweder als Pulver verwendet werden oder zu Formkörpern verarbeitet werden, indem man sie auf makroskopische anorganische oder organische Trägermaterialien auf- oder einbringt oder sie zu makroskopischen Formkörpern formt.

Verwendet man pulverförmige Multimetallcyanidverbindungen als Katalysatoren zur Synthese der Butandiol-1,4 gestarteten bzw. der α-Hydroxy-ω-hydroxypoly(oxy-1,4-butandiyl) gestarteten Polyetherpolyole, so kann man entweder während oder nach der Synthese organische oder anorganische Hilfsstoffe zusetzen, die die Abtrennbarkeit der Multimetallcyanidverbindungen weiter verbessern, ohne deren katalytische Aktivität zu beeinträchtigen. Ferner kann man Katalysatoren verwenden, die solche Hilfsstoffe bereits enthalten.

Die oben beschriebenen Multimetallcyanidverbindungen eignen sich aufgrund ihrer hohen Aktivität hervorragend zur Durchführung des erfindungsgemäßen Verfahrens. Der Katalysator wird vorzugsweise in einer Konzentrationen von kleiner 1 Gew.-%, bevorzugt kleiner 0,5 Gew.-%, besonders bevorzugt kleiner 1000 ppm, insbesondere bevorzugt ≤ 500 ppm, bezogen auf die Gesamtmasse des Polyetherpolyols, eingesetzt.

Die Durchführung des erfindungsgemäßen Verfahrens kann sowohl kontinuierlich oder diskontinuierlich erfolgen. Die Synthese kann in Suspensions-, Festbett-, Fließbett- oder Schwebebettfahrweise erfolgen. Die Temperaturen bei der Synthese liegen zwischen 50°C und 200°C , wobei Temperaturen zwischen 90°C und 150°C bevorzugt werden.

Das verwendete Alkylenoxid kann aus der Gruppe bestehend aus Ethylenoxid, Propylenoxid, Butylenoxid, Vinyloxiran oder Mischungen ausgewählt werden, wobei Ethylenoxid und Propylenoxid bevorzugt verwendet werden.

Die nach dem erfindungsgemäßen Verfahren hergestellten Polyetheralkohole haben vorzugsweise Molekulargewichte im Bereich von 2000 bis 10 000 g/mol. Ihre Verwendung erfolgt insbesondere zur Umsetzung mit Isocyanaten zu Polyurethan-Weichschaumstoffen.

Durch die Verwendung der erfindungsgemäßen Vorlage-Starter kann die Herstellung von Polyetherolen mit Multimetallcyanidverbindungen mit einem sehr guten Anspringverhalten und einem sicheren, zuverlässigen Reaktionsverlauf bei der Alkoxylierung durchgeführt werden. Durch Kombination der erfindungsgemäß verwendeten Vorlage-Starter mit an sich bekannten höherfunktionellen, vorzugsweise trifunktionellen, Vorlage-Startern bzw. Additions-Startern werden Polyetherpolyole mit Funktionalitäten größer 2 leicht zugänglich. Von besonders großer industrieller Bedeutung sind hierbei Weichschaum-Polyetherpolyole mit OH-Funktionalitäten von 2,1 bis 2,6, wie sie technisch bevorzugt verwendet werden. Durch das erfindungsgemäße Verfahren werden die Anwendungsmöglichkeiten der Katalyse mit Multimetallcyanidverbindungen erheblich erweitert.

Die Erfindung soll an nachstehenden Beispielen näher erläutert werden.

Die Hydroxylzahlen wurden nach DIN 53240 bestimmt, die Viskosität der Polyole bei 25 °C nach DIN 51550. Die ungesättigten Bestandteile wurden nach der Quecksilber-Acetat-Methode nach ASTM D 4671-87 gemessen. Die Bestimmung von Zink und Cobalt erfolgte mit Atom-Emissions-Spektroskopie mit induktiv gekoppeltem Plasma (ICP-AES), die Nachweisgrenze liegt bei ca. 1 ppm. Die Gelpermeationschromatographie (GPC) erfolgte mit 3 GPC-Säulen (Typ "PSS-Gel" mit 5 µm-Füllungen, zwei 100 Å Säulen und eine 500 Å Säule) mit Tetrahydrofuran als Laufmittel (1 ml / min) unter Verwendung eines Brechungsindexdetektors. Zur Kalibrierung der GPC dienten handelsübliche lineare Polypropylenoxid-Standards. Die Datenauswertung erfolgte mit einer Software der Fa. Polymer Standard Services (PSS), Mainz BRD. Mit Mₙ ist die zahlenmittlere Molmasse, mit M_{w} die gewichtsmittlere Molmasse und mit D die Polydispersität (=M_{w} / Mₙ) bezeichnet.

### Herstellung der Multimetallcyanidverbindungen

### Beispiel 1

1000ml stark saurer Ionenaustauscher (K2431, Fa. Bayer) wurden zweimal mit 450g Salzsäure (37% HCl-Gehalt) regeneriert und danach mit Wasser solange gewaschen bis der Ablauf neutral war. Danach gab man eine Lösung von 80,8 g K₃[Co(CN)₆] in 250 ml Wasser auf die Austauschersäule. Die Säule wurde danach solange eluiert bis der Auslauf wieder neutral war. Das Co:K-Verhältnis im gewonnen Eluat war größer 10:1. Die 1269 g Eluat wurden auf 40°C temperiert und anschließend unter Rühren mit einer Lösung von 80,0 g Zn(II)-Acetat in 240 g Wasser versetzt. Anschließend wurden zur Suspension 276,4g tert.-Butanol gegeben. Die Suspension wurde bei 40°C weitere 30 Minuten gerührt. Danach wurde der Feststoff abgesaugt und auf dem Filter mit 300 ml tert.-Butanol gewaschen. Der so behandelte Festkörper wurde bei Raumtemperatur getrocknet.

### Herstellung der Polyetherpolyole

### Beispiel 2 (nicht erfindungsgemäß)

Die Synthese wurde in einem gereinigten und getrockneten 10 l Rührreaktor ausgeführt. Bei 50°C Manteltemperatur wurden 113,0 g Butandiol-1,4 in den Reaktor gegeben. Dann wurde durch dreimaliges Füllen des Reaktors mit Stickstoff (0-7 bar absolut) der Kesselinhalt inertisiert. Bei 80°C wurde 2 Stunden ein Vakuum von < 1 mbar abs. angelegt. Das Vakuum wurde mit Stickstoff aufgehoben. 5,025 g Katalysator aus Beispiel 1 (entsprechend 2000 ppm bezogen auf Endprodukt) wurden in den Rührreaktor eingefüllt, der Reaktor wurde durch dreimaliges Füllen mit Stickstoff bei einem Druck von 0-7 bar abs. inertisiert. Bei 80°C wurde 30 Minuten ein Vakuum von < 1 mbar abs. angelegt. Nach dem Evakuieren des Reaktors wurden bei 125°C 100 g Propylenoxid zudosiert. Es wurde ein Druck von 1,7 bar abs. erreicht, der 25 min nach Beginn der Propylenoxid-Dosierung abfiel und das Anspringen der Reaktion anzeigte. Es wurden im Anschluß weitere 2300 g Propylenoxid bei gleicher Temperatur in 2,5 Stunden zudosiert. Das Druckmaximum lag bei 3,4 bar abs. Es wurde 15 min bei 125 °C nachgerührt.

Nach Reaktionsende wurde bei 125°C für 30 min ein Wasserstrahlpumpen-Vakuum angelegt. Zur Abtrennung des Katalysators wurde über eine doppelte Schicht eines Seitz-Tiefenfilters filtriert.

Das entstandene Polyetherol wies folgende Kennwerte auf: Hydroxylzahl: 52 mg KOH/g, Viskosität bei 25°C: 397 mPa*s, ungesättigte Bestandteile: 0,0051 meq / g, Zinkgehalt: 11 ppm, Cobaltgehalt: 5 ppm.

Molekulargewicht nach Gelpermeationschromatographie (GPC): Mₙ :1958 g/mol, M_{w}: 2006 g/mol, D: 1,025.

### Beispiel 3 (nicht erfindungsgemäß)

Die Synthese wurde in einem gereinigten und getrockneten 10 l Rührreaktor ausgeführt. Bei Raumtemperatur wurden 226,5 g Butandiol-1,4 in den Reaktor, dessen Manteltemperatur 50°C betrug, gegeben. Dann wurde durch dreimaliges Füllen des Reaktors mit Stickstoff bei einem Druck von 0-7 bar abs. der Kesselinhalt inertisiert. Bei 85°C wurde 2 Stunden ein Vakuum von < 1 mbar abs. angelegt. Das Vakuum wurde mit Stickstoff aufgehoben. 2,518 g Katalysator gemäß Beispiel 1 (entsprechend 500 ppm bezogen auf Endprodukt) wurden in den Rührreaktor eingefüllt und der Reaktor durch dreimaliges Füllen mit Stickstoff bei 0-7 bar abs. inertisiert. Bei 85°C wurde 30 Minuten ein Vakuum von < 1 mbar abs. angelegt. Nach dem Evakuieren des Reaktors wurden bei 125°C 240 g Propylenoxid zudosiert, wobei der Druck auf 5,548 bar abs. stieg. Der Druck fiel innerhalb von 8 min. nach Beginn der Propylenoxid-Dosierung ab und zeigte das Anspringen der Reaktion an. Es wurden im Anschluß weitere 4569,2 g Propylenoxid bei einer Temperatur von 125 °C in einer Zeit von 3 Stunden 52 Minuten zugefahren, danach wurde 35 Minuten bei 125°C nachgerührt.

Nach Reaktionsende (bei 125°C) wurde 15 min ein Wasserstrahlpumpenvakuum angelegt. Zur Abtrennung des Katalysators wurde über eine doppelte Schicht eines Seitz-Tiefenfilters filtriert.

Das entstandene Polyetherol wies folgende Kennwerte auf: Hydroxylzahl: 54,0 mg KOH/g, Viskosität bei 25°C: 380 mPa*s, ungesättigte Bestandteile: 0,0053 meq / g.
Molekulargewicht nach Gelpermeationschromatographie (GPC):
Mₙ : 1926 g/mol, M_{w}: 1983 g/mol, D: 1,030.

### Beispiel 4 (nicht erfindungsgemäß)

Die Synthese wurde in einem gereinigten und getrockneten 10 l Rührreaktor ausgeführt. Bei Raumtemperatur wurden 806,1 g α-Hydroxy-ω-hydroxy-poly(oxy-1,4-butandiyl) in den Reaktor, der eine Manteltemperatur von 50°C aufwies, gegeben. Dann wurde durch dreimaliges Füllen des Reaktors mit Stickstoff bei einem Druck von 0-7 bar abs. der Kesselinhalt inertisiert. Bei 105°C wurde 1 Stunde ein Vakuum von < 1 mbar abs. angelegt. Das Vakuum wurde mit Stickstoff aufgehoben. 1,253 g Katalysator gemäß Beispiel 1 (entsprechend 500 ppm bezogen auf Endprodukt) wurden in den Rührreaktor eingefüllt, der Reaktor wurde durch dreimaliges Füllen mit Stickstoff bei einem Druck von 0-7 bar abs. inertisiert. Bei 105°C wurde 50 Minuten ein Vakuum von < 1 mbar abs. angelegt. Nach dem Evakuieren des Reaktors wurden bei 125°C in 3 Stunden insgesamt 1703,5 g Propylenoxid zudosiert, wobei ein Druckmaximum von 0,41 bar abs. auftrat. 25 Minuten nach Beginn der Propylenoxid-Dosierung fiel der Druck wieder ab und zeigte das Anspringen der Reaktion an. Nach Ende der Dosierung wurde 35 Minuten bei 125°C nachgerührt.

Nach Reaktionsende wurde 30 min bei 125°C ein Ölpumpenvakuum angelegt. Zur Abtrennung des Katalysators wurde über eine doppelte Schicht eines Seitz-Tiefenfilters filtriert.

Das entstandene Polyetherol wies folgende Kennwerte auf: Hydroxylzahl: 55,3 mg KOH/g, Viskosität bei 25°C: 512 mPa*s, ungesättigte Bestandteile: 0,0029 meq / g.

Zinkgehalt: 2 ppm, Cobaltgehalt: 1 ppm.
Molekulargewicht nach Gelpermeationschromatographie (GPC):
Mₙ :1989 g/mol, M_{w}: 2066 g/mol, D: 1,038.

### Beispiel 5 (nicht erfindungsgemäß)

Die Synthese wurde in einem gereinigten und getrockneten 10 l Rührreaktor ausgeführt. Bei Raumtemperatur wurden 306,4 g α-Hydroxy-ω-hydroxy-poly(oxy-1,4-butandiyl) in den Reaktor, dessen Manteltemperatur 50°C betrug, gegeben. Dann wurde durch dreimaliges Füllen des Reaktors mit Stickstoff bei einem Druck von 0-7 bar abs. der Kesselinhalt inertisiert. Bei 105°C wurde 1 Stunde ein Vakuum von < 1 mbar abs. angelegt. Das Vakuum wurde mit Stickstoff aufgehoben. 1,253 g Katalysator gemäß Beispiel 1 (entsprechend 500 ppm bezogen auf Endprodukt) wurden in den Rührreaktor eingefüllt, der Reaktor wurde durch dreimaliges Füllen mit Stickstoff bei einem Druck von 0-7 bar abs. inertisiert. Bei 105 °C wurde 30 Minuten ein Vakuum von < 1 mbar abs. angelegt. Nach dem Evakuieren des Reaktors wurden bei 125°C in 3 Stunden insgesamt 2205,0 g Propylenoxid zudosiert, wobei der Maximaldruck 0,86 bar abs. betrug und die Reaktion 35 Minuten nach Beginn der Propylenoxid-Dosierung voll angesprungen war. Nach Ende der Dosierung wurde 30 Minuten bei 125°C nachgerührt.

Nach Reaktionsende wurde 30 Minuten bei 125°C ein Wasserstrahlpumpenvakuum angelegt. Zur Abtrennung des Katalysators wurde über eine doppelte Schicht eines Seitz-Tiefenfilters filtriert.

Das entstandene Polyetherol wies folgende Kennwerte auf: Hydroxylzahl: 53,7 mg KOH/g, Viskosität bei 25°C: 401 mPa*s, ungesättigte Bestandteile: 0,0067 meq / g.
Zinkgehalt: 2 ppm, Cobaltgehalt: 1 ppm.
Molekulargewicht nach Gelpermeationschromatographie (GPC):
Mₙ : 1969 g/mol, M_{w}: 2037 g/mol, D: 1,035.

### Beispiel 6 (Vergleich)

Die Synthese wurde in einem gereinigten und getrockneten 10 l Rührreaktor ausgeführt. Bei 50°C Manteltemperatur wurden 95,2 g Propandiol-1,3 in den Reaktor gegeben. Dann wurde durch dreimaliges Füllen des Reaktors mit Stickstoff bei einem Druck von 0-7 bar absolut der Kesselinhalt inertisiert. Bei 70°C wurde 2 Stunden ein Vakuum von < 1 mbar abs. angelegt. Das Vakuum wurde mit Stickstoff aufgehoben. 5,025 g Katalysator gemäß Beispiel 1 (entsprechend 2000 ppm bezogen auf Endprodukt) wurden in den Rührreaktor eingefüllt, der Reaktor wurde durch dreimaliges Füllen mit Stickstoff bei einem Druck von 0-7 bar abs. inertisiert. Bei 70°C wurde 30 Minuten ein Vakuum von < 1 mbar abs. angelegt. Nach dem Evakuieren des Reaktors wurden bei 125°C 280 g Propylenoxid zudosiert. Es wurde ein Druck von 4,8 bar abs. erreicht, der innerhalb von 3 Stunden unverändert blieb. Der Versuch wurde abgebrochen.

### Beispiel 7 (nicht erfindungsgemäß)

Die Synthese wurde in einem gereinigten und getrockneten 10 l Rührreaktor ausgeführt. Bei 50°C Manteltemperatur wurden 260,1 g Pentandiol-1,5 in den Reaktor gegeben. Dann wurde durch dreimaliges Füllen des Reaktors mit Stickstoff bei einem Druck von 0-7 bar absolut der Kesselinhalt inertisiert. Bei 87,5°C wurde zwei Stunden ein Vakuum von < 1 mbar abs. angelegt. Das Vakuum wurde mit Stickstoff aufgehoben. 9,989 g Katalysator gemäß Beispiel 1 (entsprechend 2000 ppm bezogen auf Endprodukt) wurden in den Rührreaktor eingefüllt. Der Reaktor wurde durch dreimaliges Füllen mit Stickstoff bei einem Druck von 0-7 bar absolut der inertisiert. Bei 87,5°C wurde 45 Minuten ein Vakuum von < 1 mbar abs. angelegt. Nach dem Evakuieren des Reaktors wurden bei 125°C 251 g Propylenoxid in 13 Minuten zudosiert. Es wurde ein Druck von 5,77 bar abs. erreicht, der innerhalb von 15 Minuten auf 3,65 bar abs. abnahm. Die Dosierung des Propylenoxids wurde mit 600 g pro Minute fortgesetzt, wobei sich nach weiteren 38 Minuten ein Druckmaximum von 6,68 bar abs. einstellte. Von diesem Zeitpunkt an wurde die Reaktion deutlich schneller. Die Dosiergeschwindigkeit des Propylenoxids wurde schrittweise auf 2800 g pro Stunde erhöht. Das Druckminimum betrug 0,95 bar abs., der Druck am Ende der Dosierung des Propylenoxids 1,49 bar abs.. Insgesamt wurden 4743,5 g Propylenoxid zudosiert. Nach Abschluß der Dosierung des Propylenoxids wurde 10 Minuten bei 125°C nachgerührt. Es stellte sich ein konstanter Enddruck von 0,14 bar abs. ein. Nach Abschluß der Reaktion wurde bei 105°C für 10 Minuten ein Wasserstrahlpumpenvakuum angelegt. Zur Abtrennung des Katalysators wurde über eine doppelte Schicht eines Seitz-Tiefenfilters filtriert.

### Beispiel 8 (Vergleich)

Die Synthese wurde in einem gereinigten und getrockneten 10 l Rührreaktor ausgeführt. Bei 50°C Manteltemperatur des Reaktors wurden 147,7 g Hexandiol-1,6 in den Reaktor gegeben. Dann wurde durch dreimaliges Füllen des Reaktors mit Stickstoff bei einem Druck von 0-7 bar absolut der Kesselinhalt inertisiert. Bei 80°C wurde 2 Stunden ein Vakuum von < 1 mbar abs. angelegt. Das Vakuum wurde mit Stickstoff aufgehoben. 5,021 g Katalysator gemäß Beispiel 1 (entsprechend 2000 ppm bezogen auf Endprodukt) wurden in den Rührreaktor eingefüllt, der Reaktor wurde durch dreimaliges Füllen mit Stickstoff bei einem Druck von 0-7 bar abs. inertisiert. Bei 80°C wurde 30 Minuten ein Vakuum von < 1 mbar abs. angelegt. Nach dem Evakuieren des Reaktors wurden bei 125°C 300 g Propylenoxid zudosiert. Es wurde ein Druck von 5,2 bar abs. erreicht, der innerhalb von 3 Stunden auf 4,9 bar abs. abfiel. Der Versuch wurde abgebrochen.

### Beispiel 9 (nicht erfindungsgemäß)

Die Synthese wurde in einem gereinigten und getrockneten 10 l Rührreaktor ausgeführt. Bei Raumtemperatur wurde eine Mischung aus 34,72 g Butandiol-1,4 und 163,18 g eines Glycerin-Propoxylates mit einer Molekularmasse von 423,4 g / mol in den Reaktor, der eine Manteltemperatur von 30°C aufwies, gegeben. Dann wurde durch dreimaliges Füllen des Reaktors mit Stickstoff bei einem Druck von 0-7 bar abs. der Kesselinhalt inertisiert. Bei einer Manteltemperatur des Reaktors von 100°C wurde 1,5 Stunden ein Vakuum von < 1 mbar abs. angelegt. Das Vakuum wurde mit Stickstoff aufgehoben. 1,55 g Katalysator gemäß Beispiel 1 (entsprechend 600 ppm bezogen auf Endprodukt) wurden in den Rührreaktor eingefüllt, der Reaktor wurde durch dreimaliges Füllen mit Stickstoff bei einem Druck von 0-7 bar abs. inertisiert. Bei einer Manteltemperatur des Reaktors von 100°C wurde 40 Minuten ein Vakuum von < 1 mbar abs. angelegt. Nach dem Evakuieren des Reaktors und Aufpressen von 0,5 bar Stickstoff wurden bei 130°C Manteltemperatur des Reaktors 150 g Propylenoxid zudosiert. Es wurde ein Druck von 5,75 bar abs. erreicht, die Reaktion sprang innerhalb von weniger als 5 Minuten an. Es wurden im Anschluß weitere 2239,2 g Propylenoxid bei 125°C Innentemperatur des Reaktors in 2 Stunden 47 Minuten zugefahren. Der Enddruck lag bei 1,1 bar abs. Danach wurde 1 Stunde bei 125°C nachgerührt.

Nach Reaktionsende wurde bei 125°C für 40 Minuten ein Wasserstrahlpumpenvakuum angelegt. Zur Abtrennung des Katalysators wurde über eine doppelte Schicht eines Seitz-Tiefenfilters filtriert.

Das entstandene Polyetherol wies folgende Kennwerte auf: Hydroxylzahl: 42,5 mg KOH/g, Viskosität bei 25°C: 688 mPa*s, ungesättigte Bestandteile 0,0052: meq / g.
Molekulargewicht nach Gelpermeationschromatographie (GPC):
Mₙ : 2787 g/mol, M_{w}: 2977 g/mol, D: 1,068.

### Beispiel 10 (nicht erfindungsgemäß)

Die Synthese wurde in einem gereinigten und getrockneten 10 l Rührreaktor ausgeführt. Bei Raumtemperatur wurden 253,3 g Butandiol-1,4 im Reaktor, dessen Manteltemperatur 50°C betrug, vorgelegt. Dann wurde durch dreimaliges Füllen des Reaktors mit Stickstoff bei einem Druck von 0-7 bar abs. der Kesselinhalt inertisiert. Bei 90°C Manteltemperatur wurde für 1,5 Stunden ein Vakuum von < 1 mbar abs. angelegt. Das Vakuum wurde mit Stickstoff aufgehoben. 4,215 g Katalysator gemäß Beispiel 1 (entsprechend 624 ppm bezogen auf Endprodukt) wurden in den Rührreaktor eingefüllt; der Reaktor wurde durch zweimaliges Füllen mit Stickstoff bei einem Druck von 0-7 bar abs. inertisiert. Nach dem Evakuieren des Reaktors wurden bei einer Manteltemperatur von 125°C 201 g Propylenoxid zudosiert. Die Reaktion sprang 20 Minuten nach Beginn der Propylenoxid-Dosierung an. Die Gesamtmenge an zudosiertem Propylenoxid über die gesamte Reaktionszeit betrug 6417,5 g. Nach Zugabe von 1040 g Propylenoxid wurde mit dem Zutropfen von 86,2 g Glycerin mit einer Geschwindigkeit von 10 bis 27 Tropfen / Minute begonnen. Das Glycerin wurde innerhalb von 2 Stunden 12 Minuten bei Drücken von 0,68 bis 0,98 bar abs. zugetropft. Bei Beendigung der Glycerin-Dosierung waren 3875 g Propylenoxid zudosiert. Das restliche Propylenoxid wurde in weiteren 2 Stunden 25 Minuten zudosiert. Der Enddruck lag bei 1,58 bar abs. Danach wurde 40 Minuten bei 125 °C nachgerührt.

Nach Reaktionsende wurde bei 125°C für 40 Minuten ein Wasserstrahlpumpenvakuum angelegt. Zur Abtrennung des Katalysators wurde über eine doppelte Schicht eines Seitz-Tiefenfilters filtriert.

Das entstandene Polyetherol wies folgende Kennwerte auf: Hydroxylzahl: 68,4 mg KOH/g, Viskosität bei 25°C: 331 mPa*s, ungesättigte Bestandteile 0,0083: meq / g.
Molekulargewicht nach Gelpermeationschromatographie (GPC):
Mₙ : 1684 g/mol, M_{w} : 1837 g/mol, D: 1,091.

### Beispiel 11 (nicht erfindungsgemäß)

Die Synthese wurde in einem gereinigten und getrockneten 10 l Rührreaktor ausgeführt. Bei Raumtemperatur wurden 2570,8 g Reaktionsprodukt aus Beispiel 10 in den Reaktor, dessen Manteltemperatur 50°C betrug, gegeben. Dann wurde durch dreimaliges Füllen des Reaktors mit Stickstoff bei einem Druck von 0-7 bar abs. der Kesselinhalt inertisiert. Bei 110°C wurde 1 Stunde ein Vakuum von < 1 mbar abs. angelegt. Das Vakuum wurde mit Stickstoff aufgehoben. 1,560 g Katalysator gemäß Beispiel 1 (entsprechend 311 ppm bezogen auf Endprodukt) wurden in den Rührreaktor eingefüllt, der Reaktor wurde durch dreimaliges Füllen mit Stickstoff bei einem Druck von 0-7 bar abs. inertisiert. Bei 110°C wurde 25 Minuten ein Vakuum von < 1 mbar abs. angelegt. Nach dem Evakuieren des Reaktors wurden bei 125°C in 3 Stunden insgesamt 2453,3 g Propylenoxid zudosiert, wobei der Maximaldruck vor dem Anspringen der Reaktion 0,56 bar abs. und der Druck am Ende der Dosierung 0,99 bar abs. betrug. Die Reaktion sprang 20 Minuten nach Beginn der Propylenoxid-Dosierung an. Nach Ende der Dosierung wurde 30 Minuten bei 125°C nachgerührt, wobei sich ein Enddruck von 0,35 bar abs. einstellte.

Nach Reaktionsende wurde 30 min bei 105°C ein Wasserstrahlpumpenvakuum angelegt. Zur Abtrennung des Katalysators wurde über eine doppelte Schicht eines Seitz-Tiefenfilters filtriert.

Das entstandene Polyetherol wies folgende Kennwerte auf: Hydroxylzahl: 35,8 mg KOH/g, Viskosität bei 25°C: 691 mPa*s, ungesättigte Bestandteile: 0,0071 meq / g.
Zinkgehalt: 3 ppm, Cobaltgehalt: 1 ppm.
Molekulargewicht nach Gelpermeationschromatographie (GPC):
Mₙ : 2935 g/mol, M_{w}: 3072 g/mol, D: 1,046.

## Patentansprüche

1. Verfahren zur Herstellung von Polyetherpolyolen durch katalytische Umsetzung von H-funktionellen Startsubstanzen mit niederen Alkylenoxiden ausgewält ans der Gruppe enthaltend ethylenoxid, Propylenoxid, Butylenoxid, Vinyloxiran und Mischungen aus mindenstens zwei dieser verbindungen, **dadurch gekennzeichnet, daß** man als Katalysatoren Multimetallcyanidverbindungen und als H-funktionelle Startsubstanzen für die Polymerisation von Alkylenoxiden Mischungen aus Butandiol-1,4 und anderen H-funktionellen Startern, Mischungen aus α-Hydroxy-ω-hydroxypoly(oxy-1,4-butandiyl) und anderen H-funktionalen Startern, Pentandiol-1,5 und anderen H-funktionalen Startern, Decandiol.1,10 und anderen H-funktionalen Startern oder Mischungen aus Butandiol-1,4, α-Hydroxy-ω-hydroxypoly(oxy-1,4-butandiyl), Pentandiol-1,5, und/oder Decandiol-1,10 und anderen H-funktionalen Startern verwendet.

2. Verfahren nach Anspruch 1, **dadurch gekennzeichnet, daß** als andere H-funktionelle Starter Glyzerin und/oder Trimethylolpropan eingesetzt werden.

3. Verfahren nach Anspruch 1, **dadurch gekennzeichnet, daß** als Multimetallcyanidverbindungen solche der allgemeinen Formel I
M¹ ₐ[M²(CN)_{b}(A)_{c}]_{d} . eL, (I)
wobei
M¹ ein Metallion, ausgewählt aus der Gruppe, enthaltend Zn²⁺, Fe²⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺,
M2 ein Metallion, ausgewählt aus der Gruppe, enthaltend Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺ bedeuten und M¹ und M² gleich oder verschieden sind,
A ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat
L ein mit Wasser mischbarer Ligand, ausgewählt aus der Gruppe, enthaltend Alkohole Aldehyde, Ketone, Ether, Polyether Ester, Harnstoffe, Amide, Nitrile, und Sulfide,
b, c, und d so ausgewählt sind, daß die Elektoneutralität der Verbindung gewährleistet ist, und
e die Koordinationszahl des Liganden bedeuten,
eingesetzt werden.

4. Polyetherpolyole, herstellbar nach einem der Ansprüche 1 bis 3.

5. Verfahren zur Herstellung von Polyurethanen durch Umsetzung von Polyisocyanaten mit Verbindungen mit mindestens zwei mit Isocyanatgruppen reaktiven Gruppen, **dadurch gekennzeichnet, daß** als Verbindungen mit mindestens zwei mit Isocyanatgruppen reaktiven Gruppen Polyetherpolyole nach Anspruch 4 eingesetzt werden.

6. Polyurethane, herstellbar nach Anspruch 5.

## Claims

1. A process for the preparation of a polyether polyol comprising catalytic reaction of an H-functional initiator with a lower alkylene oxide selected from the group comprising ethylene oxide, propylene oxide, butylene oxide, vinyloxirane and mixtures of at least two of these compounds, wherein the catalyst comprises a multimetal cyanide compound and the H-functional initiator for the polymerization of the alkylene oxide comprises a mixture of butane-1,4-diol and another H-functional initiator, a mixture of α-hydroxy-ω-hydroxypoly(oxybutane-1,4-diyl) and another H-functional initiator, a mixture of pentane-1,5-diol and another H-functional initiator, a mixture of decane-1,10-diol and another H-functional initiator, or a mixture of butane-1,4-diol, α-hydroxy-ω-hydroxypoly(oxybutane-1,4-diyl), pentane-1,5-diol, and/or decane-1,10-diol and another H-functional initiator.

2. A process as defined in claim 1, wherein the other H-functional initiator used is glycerol and/or trimethylolpropane.

3. A process as defined in claim 1, wherein the multimetal cyanide compound used is one of the general formula I
M¹ ₐ[M²(CN)_{b}(A)_{c}]_{d}·eL, (I)
in which
M¹ is a metal ion selected from the group comprising Zn²⁺, Fe²⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺,
M² denotes a metal ion selected from the group comprising Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺ and M¹ and M² are identical or different,
A is an anion selected from the group comprising halide, hydroxide, sulfate, carbonate, cyanide, thiocyanate, isocyanate, cyanate, carboxylate, oxalate or nitrate,
L denotes a water-miscible ligand selected from the group comprising alcohols, aldehydes, ketones, ethers, polyethers, esters, ureas, amides, nitrites, and sulfides,
b, c and d are selected such that the electroneutrality of the compound is guaranteed, and
e is the coordination number of the ligand.

4. A polyether polyol preparable as defined in any of claims 1 to 3.

5. A process for the preparation of a polyurethane by reaction of a polyisocyanate with a compound containing at least two isocyanate-reactive groups, wherein the compound containing at least two isocyanate-reactive groups comprises a polyether polyol as defined in claim 4.

6. A polyurethane preparable as defined in claim 5.

## Revendications

1. Procédé de préparation de polyétherpolyols au moyen d'une réaction catalytique de substances de départ à fonctionnalité H avec des oxydes d'alkylène inférieurs choisis dans le groupe contenant l'oxyde d'éthylène, l'oxyde de propylène, l'oxyde de butylène, le vinyloxirane, et les mélanges d'au moins deux de ces composés, **caractérisé en ce que** l'on emploie comme catalyseurs, des composés cyanure multimétalliques et comme substances de départ à fonctionnalité H pour la polymérisation des oxydes d'alkylène, des mélanges de butanediol-1,4 et d'autres amorceurs à fonctionnalité H, des mélanges de α-hydroxy-ω-hydroxy-poly(oxy-1,4-butanediyle) et d'autres amorceurs à fonctionnalité H, de pentanediol-1,5 et d'autres amorceurs à fonctionnalité H, de décanediol-1,10 et d'autres amorceurs à fonctionnalité H ou des mélanges de butanediol-1,4, de α-hydroxy-ω-hydroxypoly(oxy-1,4-butane-diyle), de pentanediol-1,5, et/ou de décanediol-1,10 et d'autres amorceurs à fonctionnalité H.

2. Procédé selon la revendication 1, **caractérisé en ce que** la glycérine et/ou le triméthylolpropane sont mis en oeuvre en tant qu'autres amorceurs à fonctionnalité H.

3. Procédé selon la revendication 1, **caractérisé en ce que**, en tant que composés cyanure multimétalliques, ceux de formule générale I sont mis en oeuvre,
M¹ ₐ[M²(CN)_{b}(A)_{c}]_{d}.eL, (I)
dans laquelle
M¹ représente un ion métallique choisi dans le groupe contenant Zn²⁺, Fe²⁺, Co³⁺, Ni²⁺, Mn²⁺, Co²⁺, Sn²⁺, Fb²⁺, Mo⁴⁺, Mo⁶⁺, Al³⁺, V⁴⁺, V⁵⁺, Sr²⁺, W⁴⁺, W⁶⁺, Cr²⁺, Cr³⁺,
M² représente un ion métallique choisi dans le groupe contenant Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺, et M¹ et M² sont identiques ou différents,
A représente un anion, choisi dans le groupe contenant l'ion halogénure, hydroxyde, sulfate, carbonate, cyanure, thiocyanate, isocyanate, cyanate, carboxylate, oxalate ou nitrate,
L représente un ligand miscible à l'eau, choisi dans le groupe contenant les alcools, les aldéhydes, les cétones, les éthers, les polyéthers, les esters, les urées, les amides, les nitriles, et les sulfures,
b, c et d sont choisis de sorte à assurer la neutralité électrique du
e composé, et représente le nombre de coordination du ligand.

4. Polyétherpolyols que l'on peut préparer selon l'une quelconque des revendications 1 à 3.

5. Procédé de préparation de polyuréthanes au moyen d'une réaction de polyisocyanates avec des composés ayant au moins deux groupes réactifs envers des groupes isocyanate, **caractérisé en ce que** les polyétherpolyols selon la revendication 4 sont mis en oeuvre en tant que composés ayant au moins deux groupes réactifs envers les groupes isocyanate.

6. Polyuréthanes que l'on peut préparer selon la revendication 5.
